# EUROPÄISCHE PATENTSCHRIFT

(11) **EP 1 585 893 B1**
(45) Veröffentlichungstag und Bekanntmachung des Hinweises auf die Patenterteilung: **07.04.2010**
(21) Anmeldenummer: 04703372.5
(22) Anmeldetag: 20.01.2004
(51) Int. Cl.: F02D 31/00, F02D 41/10

(54) **VERFAHREN ZUR DREHZAHL-REGELUNG EINER BRENNKRAFTMASCHINE**
METHOD FOR REGULATING THE ROTATIONAL SPEED OF AN INTERNAL COMBUSTION ENGINE
PROCEDE POUR REGULER LE REGIME D'UN MOTEUR A COMBUSTION INTERNE

(30) Priorität: 22.01.2003 DE 10302263
(43) Veröffentlichungstag der Anmeldung: 19.10.2005
(73) Patentinhaber: MTU FRIEDRICHSHAFEN GMBH, 88045 Friedrichshafen (DE)
(72) Erfinder: DÖLKER, Armin, 88090 Immenstaad (DE); BUTSCHER, Franz, 88048 Friedrichshafen (DE)
(86) Internationale Anmeldenummer: PCT/EP2004/000376
(87) Internationale Veröffentlichungsnummer: WO 2004/065773

(56) Entgegenhaltungen:
- EP-A- 1 065 364
- EP-A- 1 348 590
- US-A- 5 819 705
- US-A- 6 152 107
- US-A1- 2002 132 699

## Beschreibung

Die Erfindung betrifft ein Verfahren zur Drehzahl-Regelung einer Brennkraftmaschine nach dem Oberbegriff von Anspruch 1.

Eine als Generatorantrieb oder Schiffsantrieb vorgesehene Brennkraftmaschine wird üblicherweise in einem Drehzahl-Regelkreis betrieben. Als Regelgröße wird hierbei die Ist-Drehzahl an der Kurbelwelle erfasst. Diese wird mit einer Führungsgröße, einer Soll-Drehzahl, verglichen. Die sich hieraus ergebende Regelabweichung wird mittels eines Drehzahl-Reglers in die Stellgröße, eine Soll-Einspritzmenge, umgesetzt. Über die Stellgröße wird die eingespritzte Kraftstoffmenge eingestellt. Zur Stabilisierung des Drehzahl-Regelkreises wird im Rückkopplungszweig ein Ein- oder Zwei-Umdrehungsfilter vorgesehen.

Eine derartige Brennkraftmaschine wird häufig in einem stationären Betriebszustand betrieben, d. h. bei einer konstanten Drehzahl. Beispielsweise entsprechen 1500 Umdrehungen/Minute bei einer Generatoranwendung einer Netzfrequenz von 50 Hz. Im weiteren Text wird der stationäre Betriebszustand als erster Betriebszustand bezeichnet.

Aufgrund äußerer Einflüsse kann ein dynamischer Betriebszustand auftreten, beispielsweise bei Lastabschaltung oder bei Austauchen des Schiffsantriebs. Der dynamische Betriebszustand wird im weiteren Text als zweiter Betriebszustand bezeichnet. Für den zweiten Betriebszustand definieren Industrie-Normen eine zulässige Drehzahl-Überhöhung bei Auftreten des zweiten Betriebszustands, beispielsweise 10 Prozent der Nenndrehzahl.

Aus der DE 199 37 139 C1 ist ein Verfahren zur Steuerung einer Brennkraftmaschine bekannt, bei dem mit Erkennen einer signifikanten Laständerung am Abtrieb der Einspritzbeginn nach spät verstellt wird. Bei diesem Verfahren wird also mit Erkennen des zweiten Betriebszustands einer Erhöhung der Drehzahl über eine Steuerung entgegengewirkt. Die DrehzahlErhöhung wird folglich nicht nur über den Drehzahl-Regler ausgeregelt. Als zusätzliche Maßnahme ist im Einspritzbeginn-Kennfeld eine Drehzahlbegrenzungs-Kurve zur Reduzierung der Soll-Einspritzmenge vorgesehen.

Aus dem gleichen Stand der Technik ist ebenfalls bekannt zwischen dem Drehzahl-Regler und der Regelstrecke eine Minimalwert-Auswahl anzuordnen. Über die Minimalwert-Auswahl wird die vom Drehzahl-Regler berechnete Soll-Einspritzmenge mit einer weiteren Eingangsgröße verglichen.

Das aus dem Stand der Technik bekannte Verfahren hat sich in der Praxis bewährt. Problematisch ist jedoch der Umstand, dass der Drehzahlbereich im ersten Betriebszustand durch die Drehzahlbegrenzungs-Kurve eingeschränkt wird.

Daher liegt der Erfindung die Aufgabe zu Grunde, ein Verfahren zur Drehzahl-Regelung bereitzustellen, welches im Rahmen der Industrie-Normen eine größere Wahlfreiheit im ersten Betriebszustand gestattet.

Weitere Verfahren zur Drehzahlregelung sind aus US 2002 132 699 und US 615 237 bekannt.

Die Aufgabe wird durch die Merkmale des Anspruchs 1 gelöst. Die Ausgestaltungen hierzu sind in den Unteransprüchen dargestellt.

Die Erfindung sieht vor, dass im ersten Betriebszustand der Brennkraftmaschine die weitere Eingangsgröße der Minimalwert-Auswahl einer ersten Einspritzmenge entspricht, welche mittels einer ersten Kennlinie berechnet wird. Im zweiten Betriebszustand der Brennkraftmaschine entspricht die weitere Eingangsgröße der Minimalwert-Auswahl einer zweiten Einspritzmenge, welche mittels einer zweiten Kennlinie berechnet wird, wobei mit Erfüllen einer Umschalt-Bedingung von der ersten auf die zweite Kennlinie gewechselt wird. Die Umschalt-Bedingung ist dann erfüllt, wenn eine erste Regelabweichung negativ wird und einen Grenzwert unterschreitet. Eine negative Regelabweichung liegt immer dann vor, wenn die Regelgröße, also die Ist-Drehzahl der Brennkraftmaschine, größer als die Sollwert-Vorgabe wird. Bei Erfüllen der Umschalt-Bedingung wird die zweite Kennlinie mit dem Wert der ersten Einspritzmenge der ersten Kennlinie zum Umschalt-Zeitpunkt initialisiert. Danach wird über die zweite Kennlinie die zweite Einspritzmenge ausgehend vom Initialisierungs-Wert auf Null oder einen Vorgabewert reduziert, wenn die Ist-Drehzahl weiter ansteigt.

Die größere Wahlfreiheit im ersten Betriebszustand wird durch die Erfindung dadurch erzielt, dass die erste Kennlinie keine oder eine zu hohen Drehzahlwerten verschobene Drehzahlbegrenzungs-Kurve enthält. Im ersten Betriebszustand kann vom Anwender jede beliebige Drehzahl eingestellt werden. Eine Drehzahl-Begrenzung erfolgt erst dann, wenn der zweite Betriebszustand erkannt wird. Über die zweite Kennlinie werden folglich die Vorgaben der Industrie-Normen eingehalten.

Da die Drehzahl-Begrenzung im zweiten Betriebszustand wie im Stand der Technik über eine Steuerung verwirklicht wird, ist eine Optimierung der Drehzahl-Reglerparameter für das Lastabschalten nicht erforderlich. Daher kann der Drehzahl-Regler vom Hersteller der Brennkraftmaschine ausschließlich für den ersten Betriebszustand optimiert werden. Für den Drehzahl-Regler können daher robuste Parameter verwendet werden.

In den Zeichnungen sind die bevorzugten Ausführungsbeispiele der Erfindung dargestellt. Es zeigen:
- Fig. 1: ein Systemschaubild
- Fig. 2: einen Drehzahl-Regelkreis gemäß dem Stand der Technik
- Fig. 3: ein erstes Blockschaltbild (erstes Ausführungsbei- spiel)
- Fig. 4: ein zweites Blockschaltbild (zweites Ausführungsbei- spiel)
- Fig. 5: eine Drehzahlbegrenzungs-Kurve nach dem Stand der Technik
- Fig. 6: eine erste Kennlinie
- Fig. 7: eine zweite Kennlinie
- Fig. 8: einen Programmablaufplan

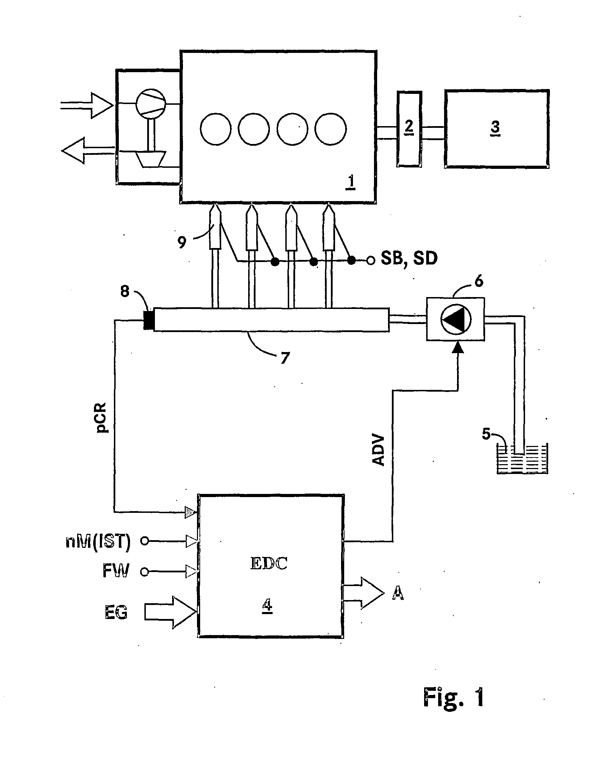

Die Figur 1 zeigt ein Systemschaubild bestehend aus einer Brennkraftmaschine 1 mit einer Motorlast 3. Die Brennkraftmaschine 1 treibt über eine Welle mit einem Übertragungsglied 2 die Motorlast 3 an. Bei der dargestellten Brennkraftmaschine 1 wird der Kraftstoff über ein Common-Rail-System eingespritzt. Dieses umfasst folgende Komponenten: Pumpen 6 mit Saugdrossel zur Förderung des Kraftstoffs aus einem Kraftstofftank 5, ein Rail 7 zum Speichern des Kraftstoffs und Injektoren 9 zum Einspritzen des Kraftstoffs aus dem Rail 7 in die Brennräume der Brennkraftmaschine 1.

Die Betriebsweise der Brennkraftmaschine 1 wird durch ein elektronisches Steuergerät (EDC) 4 geregelt. Das elektronische Steuergerät 4 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien appliziert. Über diese berechnet das elektronische Steuergerät 4 aus den Eingangsgrößen die Ausgangsgrößen. In Figur 1 sind exemplarisch folgende Eingangsgrößen dargestellt: ein Raildruck pCR, der mittels eines Rail-Drucksensors 8 gemessen wird, ein Ist-Drehzahl-Signal nM(IST) der Brennkraftmaschine 1, eine Eingangsgröße EG und ein Signal FW zur Leistungswunsch-Vorgabe durch den Betreiber. Bei einer Fahrzeug-Anwendung entspricht dies der Fahrpedalstellung. Unter der Eingangsgröße EG sind beispielsweise der Ladeluftdruck eines Turboladers und die Temperaturen der Kühl-/Schmiermittel und des Kraftstoffs subsumiert.

In Figur 1 sind als Ausgangsgrößen des elektronischen Steuergeräts 4 ein Signal ADV zur Steuerung der Pumpen 6 mit Saugdrossel und eine Ausgangsgröße A dargestellt. Die Ausgangsgröße A steht stellvertretend für die weiteren Stellsignale zur Steuerung und Regelung der Brennkraftmaschine 1, beispielsweise den Einspritzbeginn SB und eine Einspritzdauer SD. Über den Einspritzbeginn SB und die Einspritzdauer SD wird die Soll-Einspritzmenge qV definiert.

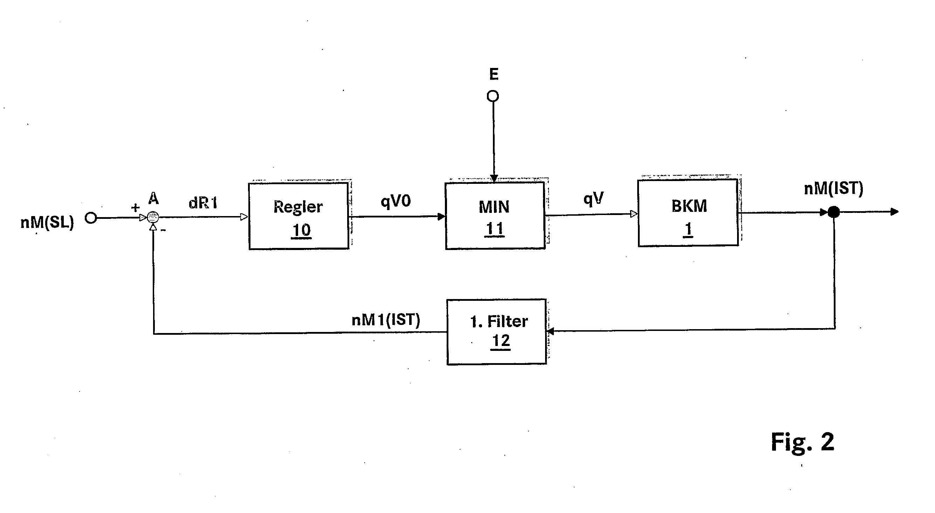

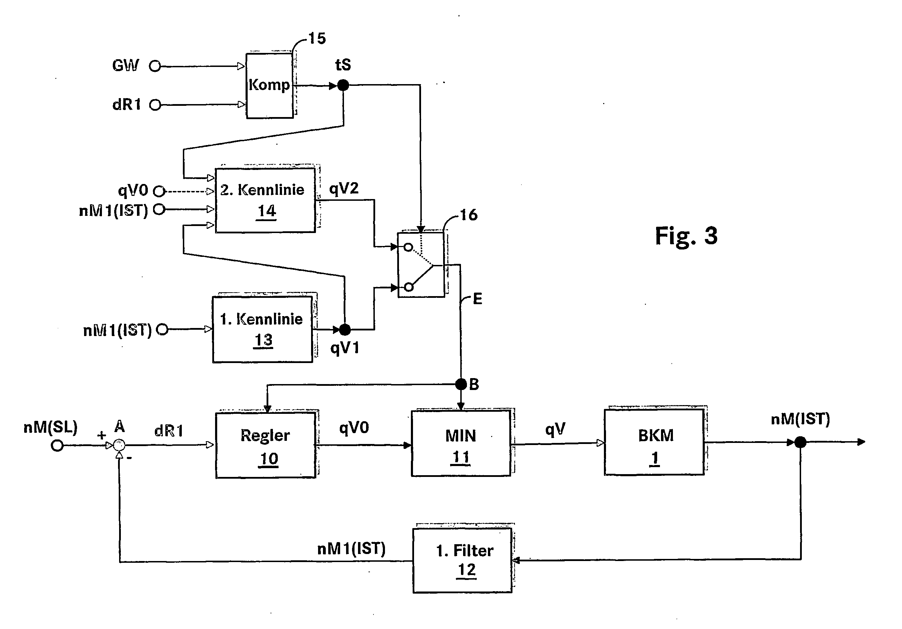

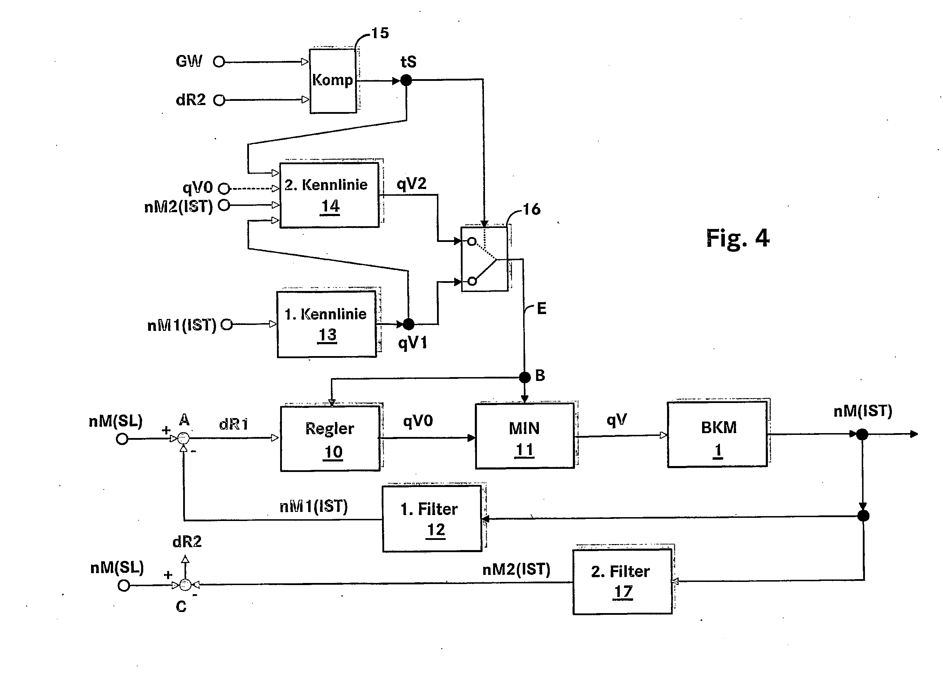

Figur 2 zeigt einen aus dem Stand der Technik bekannten Drehzahl-Regelkreis. Die Eingangsgrößen des Regelkreises sind die Führungsgröße, entsprechend einer Soll-Drehzahl nM(SL) und eine weitere Eingangsgröße E. Die Eingangsgröße E wird in Verbindung mit den Figuren 3 und 4 erläutert. Die Ausgangsgröße des Drehzahl-Regelkreises, also die Regelgröße, entspricht der rohen Ist-Drehzahl nM(IST). Diese wird über ein erstes Filter 12 in eine erste gefilterte Ist-Drehzahl nM1(IST) gewandelt. Im weiteren Text wird diese als erste Ist-Drehzahl nM1(IST) bezeichnet. Das erste Filter 12 ist im Rückkopplungszweig des Drehzahl-Regelkreises angeordnet. Üblicherweise ist dieses als Ein- oder Zwei-Umdrehungsfilter ausgeführt. Bei einem Zwei-Umdrehungsfilter werden die Drehzahlimpulse der Kurbelwelle über ein Arbeitsspiel der Brennkraftmaschine 1 erfasst, d. h. 720 Grad. An einem Vergleichspunkt A werden die Soll-Drehzahl nM(SL) und die erste Ist-Drehzahl nM1(IST) miteinander verglichen. Die sich hieraus ergebende erste Regelabweichung dR1 wird über einen Drehzahl-Regler 10 in eine erste Soll-Einspritzmenge qV0 umgesetzt. Über eine Minimalwert-Auswahl 11 werden die erste Soll-Einspritzmenge qV0 und die weitere Eingangsgröße E miteinander verglichen. Die Ausgangsgröße der Minimalwert-Auswahl 11 entspricht einer zweiten Soll-Einspritzmenge qV. Diese entspricht entweder dem Wert qV0 oder der Eingangsgröße E. Die zweite Soll-Einspritzmenge qV ist als Eingangsgröße auf die Regelstrecke, hier die Brennkraftmaschine 1, geführt. Damit ist der Regelkreis geschlossen.

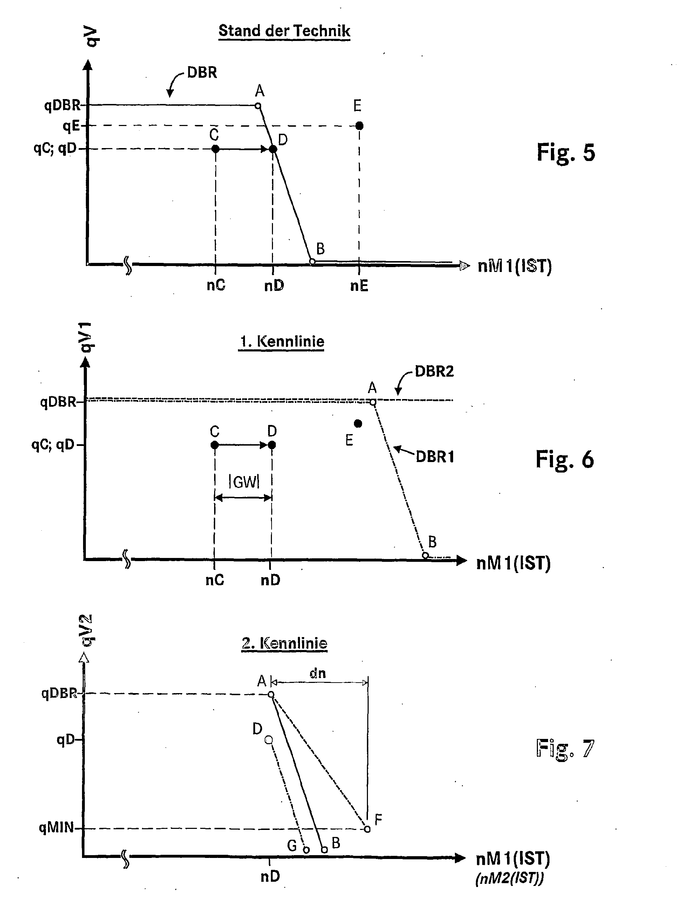

In Figur 3 ist ein erstes Ausführungsbeispiel der Erfindung als Blockschaltbild dargestellt. Mit den Bezugszeichen 1 und 10 bis 12 ist der zuvor beschriebene Drehzahl-Regelkreis dargestellt. Die Erfindung sieht nun vor, dass die Eingangsgröße E der Minimalwert-Auswahl 11 über eine erste Kennlinie 13 oder eine zweite Kennlinie 14 bestimmt wird. Die Eingangsgröße der ersten Kennlinie 13 entspricht der ersten Ist-Drehzahl nM1(IST). Über die erste Kennlinie 13 wird der Eingangsgröße eine erste Einspritzmenge qV1 zugeordnet. Die erste Kennlinie 13 ist in Figur 6 dargestellt und wird in Verbindung mit dieser erklärt. Die Eingangsgrößen der zweiten Kennlinie sind: die erste Einspritzmenge qV1, die erste Ist-Drehzahl nM1(IST) und ein Signal Umschalt-Zeitpunkt tS. Die erste Einspritzmenge qV1, also die Ausgangsgröße der ersten Kennlinie 13, wird über einen entsprechenden Rückkopplungszweig der zweiten Kennlinie 14 zugeführt. Über die zweite Kennlinie 14 wird in Abhängigkeit der Eingangsgrößen eine zweite Einspritzmenge qV2 berechnet. Die erste Einspritzmenge qV1 und die zweite Einspritzmenge qV2 sind auf einen Schalter 16 geführt. Der Zustand des Schalters 16 wird über das Signal Umschalt-Zeitpunkt tS definiert. Dieses wiederum wird mittels eines Komparators 15 aus der ersten Regelabweichung dR1 und einem Grenzwert GW berechnet. An einem Abzweigungspunkt B wird die Ausgangsgröße des Schalters 16 zusätzlich auf den Drehzahl-Regler 10 geführt. Dieser Signalpfad dient zur Begrenzung des integrierenden Anteils des Drehzahl-Reglers 10.

Die Funktion der Anordnung ist folgendermaßen: Im ersten Betriebszustand befindet sich der Schalter 16 in der gezeichneten Stellung. In diesem Betriebszustand wird die Eingangsgröße E der Minimalwert-Auswahl 11 über die erste Kennlinie 13 bestimmt. Die Eingangsgröße E entspricht folglich dem Wert der ersten Einspritzmenge qV1. Mit Erfüllen der Umschalt-Bedingung setzt der Komparator 15 das Signal tS. Die Umschalt-Bedingung wird erfüllt, wenn die erste Regelabweichung dR1 negativ wird und den Grenzwert GW unterschreitet. Ein typischer Wert für den Grenzwert GW beträgt minus 80 Umdrehungen/Minute. Mit Setzen des Signals tS ändert der Schalter 16 seine Position in die gestrichelte Stellung. Gleichzeitig wird die zweite Kennlinie 14 mit dem zuletzt berechneten Wert qV1(tS) der ersten Einspritzmenge initialisiert. Über die zweite Kennlinie 14 wird ausgehend vom Initialisierungs-Wert qV1(tS) die zweite Einspritzmenge qV2 auf den Wert Null verringert, wenn die erste Ist-Drehzahl nM1(IST) weiter ansteigt. Sobald die zweite Einspritzmenge qV2 unter den Wert der ersten Soll-Einspritzmenge qV0 fällt, wird die zweite Einspritzmenge qV2 über die Minimalwert-Auswahl 11 als maßgeblich für die zweite Soll-Einspritzmenge qV gesetzt. Die zweite Kennlinie 14 bewirkt also bei ansteigender erster Ist-Drehzahl, dass in die Brennräume der Brennkraftmaschine 1 eine abnehmende Einspritzmenge eingespritzt wird. Hierdurch wird die Drehzahl-Zunahme begrenzt. Selbstverständlich ist es möglich die zweite Einspritzmenge qV2 anstatt auf Null nur auf einen Minimalwert zu reduzieren.

Alternativ ist vorgesehen, dass die zweite Kennlinie mit Erfüllen der Umschalt-Bedingung mit dem zuletzt berechneten Wert qV0(tS) der ersten Soll-Einspritzmenge qV0 im Umschaltzeitpunkt tS initialisiert wird. Diese Alternative ist in Figur 3 gestrichelt dargestellt. Der Rückkopplungszweig von der ersten Kennlinie 13 zur zweiten Kennlinie 14 entfällt bei dieser Alternative.

In Figur 4 ist ein zweites Ausführungsbeispiel der Erfindung als Blockschaltbild dargestellt. Diese Darstellung unterscheidet sich zur Figur 3 durch ein zusätzliches zweites Filter.17. Über dieses wird aus der ungefilterten Ist-Drehzahl nM(IST) eine zweite gefilterte Ist-Drehzahl nM2(IST) berechnet. Im weiteren Text wird diese als zweite Ist-Drehzahl bezeichnet. Die zweite Ist-Drehzahl nM2(IST) wird mit der Soll-Drehzahl nM(SL) an einem Punkt C verglichen. Hieraus errechnet sich eine zweite Regelabweichung dR2. Die zweite Regelabweichung dR2 stellt die Eingangsgröße für den Komparator 15 dar. Die zweite Ist-Drehzahl nM2(IST) stellt die Eingangsgröße für die zweite Kennlinie 14 dar. Das zweite Filter 17 erfasst einen kleineren KurbelwellenWinkel als das erste Filter 12. Beispielsweise erfasst das zweite Filter 17 einen Winkel von 90 Grad. Hierdurch wird eine kürzere Reaktionszeit auf Drehzahländerungen der ungefilterten Ist-Drehzahl nM(IST) erzielt. Für die weitere Funktionalität der Anordnung gilt die Beschreibung der Figur 3.

In Figur 5 ist eine Drehzahlbegrenzungs-Kurve nach dem Stand der Technik dargestellt. Hierbei sind auf der Abszisse die erste Ist-Drehzahl nM1(IST) und auf der Ordinate die Soll-Einspritzmenge qV aufgetragen. Als durchgezogene Linie ist die Drehzahlbegrenzungs-Kurve DBR dargestellt. Die DBR-Kurve setzt sich zusammen aus einem parallel zur Abzisse verlaufenden Geradenabschnitt und einem fallenden Geradenabschnitt. Der fallende Geradenabschnitt zwischen den Punkten A und B wird im weiteren Text als Abregel-Kurve bezeichnet. Mit Bezugszeichen C ist ein erster Betriebspunkt eingezeichnet. Zu diesem gehört das Wertepaar nC und qC. Bei einer 50 Hz-Generatoranwendung entspricht der Drehzahlwert nC im Betriebspunkt C einem Drehzahlwert von 1500 Umdrehungen/Minute.

Das Verfahren nach dem Stand der Technik läuft folgendermaßen ab: Aufgrund einer Lastabschaltung vergrößert sich die erste Ist-Drehzahl nM1(IST) vom Drehzahlwert nC im Punkt C in Richtung des Punkts D. Der Punkt D liegt auf der Abregel-Kurve, Wertepaar nD und qD. Mit Erreichen des Punkts D wird die Soll-Einspritzmenge qV vom Wert qD entlang der Abregel-Kurve auf den Wert Null reduziert. Da die Industrie-Normen für das Lastabschalten eine Drehzahl-Überhöhung von beispielsweise maximal 10 Prozent der Nenndrehzahl vorgeben, wird in der Praxis die DBR-Kurve so gewählt, dass dieses Kriterium garantiert eingehalten wird. Bei einem Drehzahlwert nC im Punkt C von 1500 Umdrehungen/Minute bedeutet dies, dass dem Punkt D beispielsweise 1580 Umdrehungen/Minute zugeordnet wird. Durch die DBR-Kurve werden die Lastabschaltkriterien sicher erfüllt. Problematisch ist jedoch, dass ein Betriebspunkt E mit dem Drehzahlwert nE im ersten Zustand nicht eingestellt werden kann.

In Figur 6 ist die erste Kennlinie 13 dargestellt. Die Eingangsgröße ist die erste Ist-Drehzahl nM1(IST). Die Ausgangsgröße ist die erste Einspritzmenge qV1. Die erste Kennlinie 13 ist in der Form ausgeführt, dass die Abregel-Kurve entfällt oder zu großen Drehzahlwerten der ersten Ist-Drehzahl nM1(IST) verschoben wird. Mit Bezugszeichen DBR1 ist eine zu hohen Drehzahlwerten verschobene Abregel-Kurve dargestellt. In Figur 6 ist als gestrichelte Linie eine Kurve DBR2 dargestellt. Diese entspricht dem Wegfall der Abregel-Kurve. Im Unterschied zur Figur 5 befindet sich der Betriebspunkt E nunmehr im zulässigen Bereich. Der Betreiber der Brennkraftmaschine kann folglich den Betriebspunkt E einstellen.

In Figur 7 ist die zweite Kennlinie 14 dargestellt. Die Eingangsgröße entspricht der ersten Ist-Drehzahl nM1(IST). Die Ausgangsgröße entspricht der zweiten Einspritzmenge qV2. In Figur 7 sind alternativ drei fallende Geraden dargestellt, entsprechend den Kurven zwischen dem Punkt AB, AF und DG.

Die Funktion der Erfindung wird anhand der Figur 6 und Figur 7 erläutert. Die Brennkraftmaschine wird im ersten Betriebszustand im Betriebspunkt C betrieben. Auf Grund eines Lastabwurfs vergrößert sich die erste Ist-Drehzahl nM1(IST) vom Betriebspunkt C nach D. Im Punkt D wird die Umschalt-Bedingung erfüllt. Die Umschalt-Bedingung wird erfüllt, wenn die erste Regelabweichung dR1 negativ wird und einen Grenzwert GW unterschreitet, beispielsweise minus 80 Umdrehungen/Minute. In Figur 6 ist der Betrag dieses Grenzwerts GW entsprechend eingezeichnet. Mit Erfüllen der Umschalt-Bedingung wird von der ersten Kennlinie auf die zweite Kennlinie (Figur 7) umgeschaltet. Der Wert qDBR der ersten Einspritzmenge qV1 zum Umschalt-Zeitpunkt tS wird als Initialisierungs-Wert für die zweite Kennlinie gesetzt. Ausgehend von diesem Wert qDBR wird die zweite Einspritzmenge qV2 reduziert. Erhöht sich die erste Ist-Drehzahl nM1(IST) über den Drehzahlwert nD des Punkts D, so wird die zweite Einspritzmenge qV2 entsprechend einer der drei Abregel-Kurven nach Figur 7 abgeregelt. Über die Abregel-Kurve mit den Punkten A und B (durchgezogene Linie) wird die zweite Einspritzmenge qV2 auf Null geführt..Über die Abregel-Kurve mit den Punkten A und F (gestrichelte Linie) wird über einen Drehzahlbereich dn die zweite Einspritzmenge qV2 auf einen Wert qMIN geführt. In der Praxis wird der Wert qMIN kleiner gewählt als die Leerlauf-Einspritzmenge qLL. Über die Abregel-Kurve mit den Punkten D und G (strichpunktierte Linie) wird die zweite Einspritzmenge qV2 ausgehend vom Punkt D, Wert qD, auf Null reduziert. Diese Abregel-Kurve DG kommt dann zur Anwendung, wenn zum Umschaltzeitpunkt tS die zweite Kennlinie mit dem Wert qV0(tS) der ersten Soll-Einspritzmenge qV0 initialisiert wird. Dies entspricht den in den Figuren 3 und 4 eingezeichneten Alternativen. Als Vorteil ergibt sich bei diesem Beispiel eine schnellere Reduzierung der zweiten Einspritzmenge qV2.

Die Auswahl der entsprechenden Abregel-Kurve wird von der angetriebenen Last bestimmt. Anstelle der als Gerade ausgeführten Übergangsfunktion kann jede beliebige Funktion verwendet werden. Selbstverständlich ist es auch möglich einen größeren Wert als die Einspritzmenge qD als Initialisierungswert zu setzen. Auf der Abszisse der Figur 7 ist in Klammern gesetzt die zweite Ist-Drehzahl nM2(IST) aufgetragen. Die zweite Ist-Drehzahl nM2(IST) ist bei Verwendung des zweiten Filters 17 die Eingangsgröße der zweiten Kennlinie 14, siehe Figur 4.

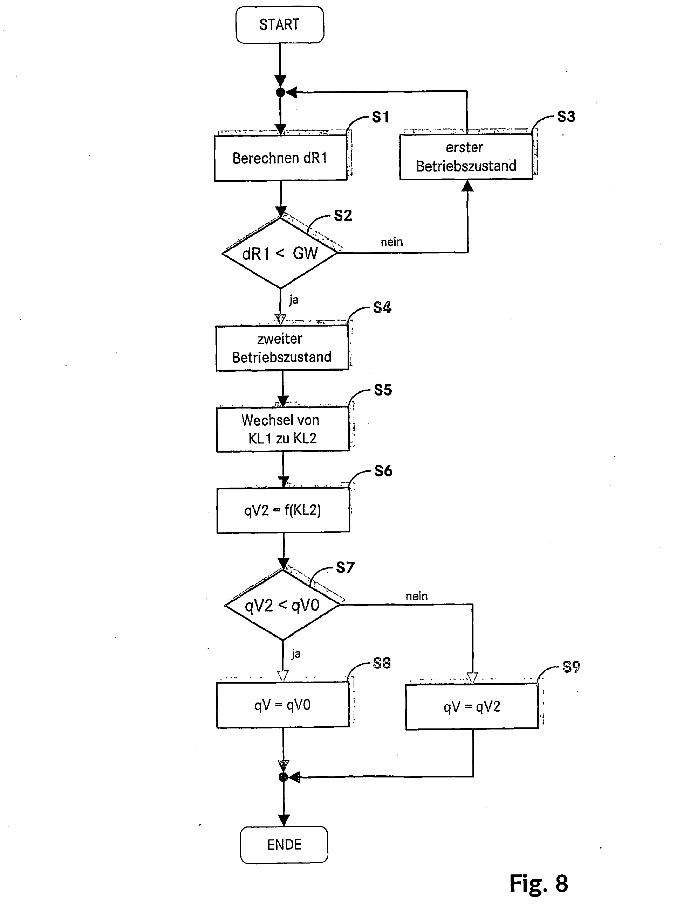

In Figur 8 ist ein Programmablaufplan dargestellt. Bei S1 wird die erste Regelabweichung dR1 berechnet. Danach wird bei S2 geprüft, ob die erste Regelabweichung dR1 den Grenzwert GW unterschreitet. Ist dies nicht der Fall, so wird zu S3 verzweigt und der erste Betriebszustand gesetzt. Ist die erste Regelabweichung dR1 negativ und unterschreitet den Grenzwert GW, so ist die Umschalt-Bedingung erfüllt. Danach wird bei S4 der zweite Betriebszustand gesetzt und bei S5 von der ersten Kennlinie auf die zweite Kennlinie gewechselt. Hierzu wird die zweite Kennlinie mit dem Wert qV1(tS) der ersten Einspritzmenge qV1 zum Umschalt-Zeitpunkt tS initialisiert. Bei S6 wird die zweite Einspritzmenge qV2 über die zweite Kennlinie, entsprechend der Figur 7, bestimmt. Danach wird bei S7 geprüft, ob die zweite Einspritzmenge qV2 die erste Soll-Einspritzmenge qV0, welche vom Drehzahl-Regler aus der ersten Regelabweichung dR1 berechnet wird, unterschreitet. Ist dies nicht der Fall, so bleibt bei S9 die zweite Einspritzmenge qV2 dominant für die zweite Soll-Einspritzmenge qV und der Programmablaufplan ist beendet. Unterschreitet die zweite Einspritzmenge qV2 den Wert der ersten Soll-Einspritzmenge qV0 im Schritt S7, so wird die erste Soll-Einspritzmenge qV0 als dominant für die zweite Soll-Einspritzmenge qV gesetzt, Schritt S8. Bei Verwendung des zweiten Filters 17, entsprechend der Darstellung der Figur 4, erfolgt die Abfrage im Schritt S2 auf die zweite Regelabweichung dR2.

Die Erfindung bietet folgende Vorteile:
- die Lastabschalt-Kriterien werden sicher eingehalten;
- keine Begrenzung des Drehzahl-Verstellbereichs im ersten Betriebszustand;
- die Drehzahl-Reglerparameter müssen nicht auf das Lastabschaltverhalten optimiert werden;
- eine robuste Auslegung des Drehzahl-Reglers ist möglich;
- ein optimaler Gleichlauf im ersten Betriebszustand wird durch die langsame Filterung (erstes Filter) erzielt;
- eine freie Gestaltung der stationären DBR-Kurve ist möglich.

### Bezugszeichen

- 1: Brennkraftmaschine
- 2: Übertragungsglied
- 3: Motorlast
- 4: elektronisches Steuergerät EDC
- 5: Kraftstofftank
- 6: Pumpen
- 7: Rail
- 8: Rail-Drucksensor
- 9: Injektoren
- 10: Drehzahl-Regler
- 11: Minimalwert-Auswahl
- 12: erstes Filter
- 13: erste Kennlinie
- 14: zweite Kennlinie
- 15: Komparator
- 16: Schalter
- 17: zweites Filter

## Patentansprüche

1. Verfahren zur Drehzahl-Regelung einer als Generatorantrieb oder Schiffsantrieb vorgesehenen Brennkraftmaschine (1) bei dem aus einem Soll-Ist-Vergleich der Drehzahlen eine erste Regelabweichung (dR1) berechnet wird, aus der ersten Regelabweichung (dR1) mittels eines Drehzahl-Reglers (10) eine erste Soll-Einspritzmenge (qV0) berechnet wird und aus der ersten Soll-Einspritzmenge (qV0) sowie einer weiteren Eingangsgröße (E) mittels einer Minimalwert-Auswahl (11) eine zweite Soll-Einspritzmenge (qV) zur Drehzahl-Regelung der Brennkraftmaschine (1) bestimmt wird,
**dadurch gekennzeichnet,**
**dass** in einem ersten, stationären, Betriebszustand der Brennkraftmaschine (1) die Eingangsgröße (E) einer ersten Einspritzmenge (qV1) entspricht (E = qV1), welche mittels einer ersten Kennlinie (13) berechnet wird, in einem zweiten, dynamischen, Betriebszustand der Brennkraftmaschine (1) die Eingangsgröße (E) einer zweiten Einspritzmenge (qV2) entspricht (E = qV2), welche mittels einer zweiten Kennlinie (14) berechnet wird, und mit Erfüllen einer Umschalt-Bedingung von der ersten (13) auf die zweite Kennlinie (14) gewechselt wird.

2. Verfahren zur Drehzahl-Regelung nach Anspruch 1,
**dadurch gekennzeichnet,**
**dass** die Umschalt-Bedingung erfüllt wird, wenn die erste Regelabweichung (dR1) negativ wird (dR1 < 0) und einen Grenzwert (GW) unterschreitet (dR1 < GW).

3. Verfahren zur Drehzahl-Regelung nach Anspruch 2,
**dadurch gekennzeichnet,**
**dass** mit Erfüllen der Umschalt-Bedingung die zweite Kennlinie (14) mit dem Wert (qV1(tS)) der ersten Einspritzmenge (qV1) zum Umschalt-Zeitpunkt (tS) initialisiert wird.

4. Verfahren zur Drehzahl-Regelung nach Anspruch 2,
**dadurch gekennzeichnet,**
**dass** mit Erfüllen der Umschalt-Bedingung die zweite Kennlinie (14) mit dem Wert (qV0(tS)) der ersten Soll-Einspritzmenge (qV0) zum Umschaltzeitpunkt (tS) initialisiert wird.

5. Verfahren zur Drehzahl-Regelung nach Anspruch 4,
**dadurch gekennzeichnet,**
**dass** mit Erfüllen der Umschalt-Bedingung die zweite Kennlinie (14) mit einem größeren Wert als die erste Soll-Einspritzmenge (qV0) zum Umschaltzeitpunkt (tS) initialisiert wird.

6. Verfahren zur Drehzahl-Regelung nach einem der Ansprüche 3 bis 5,
**dadurch gekennzeichnet,**
**dass** mittels der zweiten Kennlinie (14) die zweite Einspritzmenge (qV22) ausgehend vom Initialisierungs-Wert auf Null (qV2 = 0) oder einen Vorgabewert (qMIN) gemäß einer Übergangsfunktion reduziert wird (qV2 = qMIN).

7. Verfahren zur Drehzahl-Regelung nach Anspruch 6,
**dadurch gekennzeichnet,**
**dass** der Vorgabewert (qMIN) kleiner als eine Leerlauf-Einspritzmenge (qLL) ist.

8. Verfahren zur Drehzahl-Regelung nach Anspruch 1,
**dadurch gekennzeichnet,**
**dass** eine zweite Regelabweichung (dR2) berechnet wird und die Umschalt-Bedingung erfüllt wird, wenn die zweite Regelabweichung (dR2) negativ wird (dR2 < 0) und einen Grenzwert (GW) unterschreitet (dR2 < GW).

9. Verfahren zur Drehzahl-Regelung nach Anspruch 8,
**dadurch gekennzeichnet,**
**dass** die erste Regelabweichung (dR1) maßgeblich von einer ersten gefilterten Ist-Drehzahl (nM1(IST)) bestimmt wird und die zweite Regelabweichung (dR2) maßgeblich von einer zweiten gefilterten Ist-Drehzahl (nM2(IST)) bestimmt wird, wobei die erste gefilterte Ist-Drehzahl (nM1(IST)) mittels eines ersten Filters (12) und die zweite gefilterte Ist-Drehzahl (nM2(IST)) mittels eines zweiten Filters (17) aus der Ist-Drehzahl (nM(IST)) der Brennkraftmaschine (1) berechnet wird.

10. Verfahren zur Drehzahl-Regelung nach Anspruch 9,
**dadurch gekennzeichnet,**
**dass** das erste Filter (12) einen größeren KurbelwellenWinkel als das zweite Filter (17) erfasst.

11. Verfahren zur Drehzahl-Regelung nach einem der vorausgegangenen Ansprüche,
**dadurch gekennzeichnet,**
**dass** die Eingangsgröße (E) der Minimalwert-Auswahl (11) als Begrenzungswert für den integrierenden Anteil des Drehzahl-Reglers (10) gesetzt wird.

## Claims

1. Method for closed-loop control of the rotation speed of an internal combustion engine (1) which is provided as a generator drive or marine-vessel drive and in which a first control error (dR1) is calculated from a nominal-actual comparison of the rotation speeds, a first nominal injection amount (qV0) is calculated from the first control error (dR1) by means of a rotation speed regulator (10), and a second nominal injection amount (qV) for closed-loop control of the rotation speed of the internal combustion engine (1) is determined from the first nominal injection amount (qV0) and a further input variable (E) by means of a minimum-value selection (11),
**characterized in that**
in a first, steady, operating state of the internal combustion engine (1), the input variable (E) corresponds to a first injection amount (qV1) (E = qV1), which is calculated by means of a first characteristic (13), in a second, dynamic operating state of the internal combustion engine (1), the input variable (E) corresponds to a second injection amount (qV2) (E = qV2), which is calculated by means of a second characteristic (14), and a change takes place from the first characteristic (13) to the second characteristic (14) when a switching condition is satisfied.

2. Method for closed-loop control of rotation speed according to Claim 1,
**characterized in that**
the switching condition is satisfied when the first control error (dR1) is negative (dR1 < 0) and a limit value (GW) is undershot (dR1 < GW).

3. Method for closed-loop control of rotation speed according to Claim 2,
**characterized in that**,
when the switching condition is satisfied, the second characteristic (14) is initialized with the value (qV1(tS)) of the first injection amount (qV1) at the switching time (tS).

4. Method for closed-loop control of rotation speed according to Claim 2,
**characterized in that**,
when the switching condition is satisfied, the second characteristic (14) is initialized with the value (qV0(tS)) of the first nominal injection amount (qV0) at the switching time (tS).

5. Method for closed-loop control of rotation speed according to Claim 4,
**characterized in that**,
when the switching condition is satisfied, the second characteristic (14) is initialized with a value which is greater than the first nominal injection amount (qV0) at the switching time (tS).

6. Method for closed-loop control of rotation speed according to one of Claims 3 to 5,
**characterized in that**
the second injection amount (qV2) is reduced (qV2 = qMIN) by means of the second characteristic (14) on the basis of the initialization value to zero (qV2 = 0) or to a preset value (qMIN), in accordance with a transfer function.

7. Method for closed-loop control of rotation speed according to Claim 6,
**characterized in that**
the preset value (qMIN) is lower than an idle injection amount (qLL).

8. Method for closed-loop control of rotation speed according to Claim 1,
**characterized in that**
a second control error (dR2) is calculated, and the switching condition is satisfied when the second control error (dR2) becomes negative (dR2 < 0) and undershoots a limit value (GW) (dR2 < GW).

9. Method for closed-loop control of rotation speed according to Claim 8,
**characterized in that**
the first control error (dR1) is determined governed by a first filtered actual rotation speed (nM1(ACT)), and the second control error (dR2) is determined governed by a second filtered actual rotation speed (nM2(ACT)), wherein the first filtered actual rotation speed (nM1(ACT)) is calculated by means of a first filter (12) and the second filtered actual rotation speed (nM2(ACT)) is calculated by means of a second filter (17), from the actual rotation speed (nM(ACT)) of the internal combustion engine (1).

10. Method for closed-loop control of rotation speed according to Claim 9,
**characterized in that**
the first filter (12) detects a larger crankshaft angle than the second filter (17).

11. Method for closed-loop control of rotation speed according to one of the preceding claims,
**characterized in that**
the input variable (E) for the minimum value selection (11) is set as a limit value for the integrating component of the rotation speed regulator (10).

## Revendications

1. Procédé de régulation de la vitesse de rotation d'un moteur à combustion interne (1) destiné à être utilisé pour l'entraînement d'un générateur ou pour l'entraînement d'un navire, selon lequel un premier écart de régulation (dR1) est calculé à partir d'une comparaison consigne/réel des vitesses de rotation, une première quantité d'injection de consigne (qV0) est calculée à partir du premier écart de régulation (dR1) au moyen d'un régulateur de vitesse de rotation (10) et une deuxième quantité d'injection de consigne (qV) est déterminée à partir de la première quantité d'injection de consigne (qV0) et d'une grandeur d'entrée supplémentaire (E) au moyen d'une sélection de valeur minimale (11) pour réguler la vitesse de rotation du moteur à combustion interne (1), **caractérisé en ce que** dans un premier état de fonctionnement stabilisé du moteur à combustion interne (1), la grandeur d'entrée (E) correspond à une première quantité d'injection (qV1) (E = qV1) qui est calculée au moyen d'une première courbe caractéristique (13), dans un deuxième état de fonctionnement dynamique du moteur à combustion interne (1), la grandeur d'entrée (E) correspond à une deuxième quantité d'injection (qV2) (E = qV2) qui est calculée au moyen d'une deuxième courbe caractéristique (14), et un passage de la première (13) à la deuxième courbe caractéristique (14) est effectué lorsqu'une condition de basculement est remplie.

2. Procédé de régulation de la vitesse de rotation selon la revendication 1, **caractérisé en ce que** la condition de basculement est remplie lorsque le premier écart de régulation (dR1) devient négatif (dR1 < 0) et devient inférieur à une valeur limite (GW) (dR1 < GW).

3. Procédé de régulation de la vitesse de rotation selon la revendication 2, **caractérisé en ce que** lorsque la condition de basculement est remplie, la deuxième courbe caractéristique (14) est initialisée avec la valeur (qV1(tS)) de la première quantité d'injection (qV1) au moment du basculement (tS).

4. Procédé de régulation de la vitesse de rotation selon la revendication 2, **caractérisé en ce que** lorsque la condition de basculement est remplie, la deuxième courbe caractéristique (14) est initialisée avec la valeur (qV0(tS)) de la première quantité d'injection de consigne (qV0) au moment du basculement (tS).

5. Procédé de régulation de la vitesse de rotation selon la revendication 4, **caractérisé en ce que** lorsque la condition de basculement est remplie, la deuxième courbe caractéristique (14) est initialisée avec une valeur supérieure à la première quantité d'injection de consigne (qV0) au moment du basculement (tS).

6. Procédé de régulation de la vitesse de rotation selon l'une des revendications 3 à 5, **caractérisé en ce que** la deuxième quantité d'injection (qV2) est réduite au moyen de la deuxième courbe caractéristique (14) de la valeur d'initialisation à zéro (qV2 = 0) ou à une valeur prédéfinie (qMIN) selon une fonction de transition (qV2 = qMIN).

7. Procédé de régulation de la vitesse de rotation selon la revendication 6, **caractérisé en ce que** la valeur prédéfinie (qMIN) est inférieure à la quantité d'injection au ralenti (qLL).

8. Procédé de régulation de la vitesse de rotation selon la revendication 1, **caractérisé en ce qu'**un deuxième écart de régulation (dR2) est calculé et la condition de basculement est remplie lorsque le deuxième écart de régulation (dR2) devient négatif (dR2 < 0) et devient inférieur à une valeur limite (GW) (dR2 < GW).

9. Procédé de régulation de la vitesse de rotation selon la revendication 8, **caractérisé en ce que** le premier écart de régulation (dR1) est déterminé en priorité par une première vitesse de rotation réelle (nM1(IST)) filtrée et le deuxième écart de régulation (dR2) est déterminé en priorité par une deuxième vitesse de rotation réelle (nM2(IST)) filtrée, la première vitesse de rotation réelle (nM1(IST)) filtrée étant calculée au moyen d'un premier filtre (12) et la deuxième vitesse de rotation réelle (nM2(IST)) filtrée au moyen d'un deuxième filtre (17) à partir de la vitesse de rotation réelle (nM(IST)) du moteur à combustion interne (1).

10. Procédé de régulation de la vitesse de rotation selon la revendication 9, **caractérisé en ce que** le premier filtre (12) englobe un angle de vilebrequin plus grand que le deuxième filtre (17).

11. Procédé de régulation de la vitesse de rotation selon l'une des revendications précédentes, **caractérisé en ce que** la grandeur d'entrée (E) de sélection de la valeur minimale (11) est définie comme valeur de limitation pour la partie intégration du régulateur de vitesse de rotation (10).
